# EUROPÄISCHE PATENTANMELDUNG

(11) **EP 4 797 487 A1**
(43) Veröffentlichungstag der Anmeldung: **26.08.2026**
(21) Anmeldenummer: 25158791.1
(22) Anmeldetag: 19.02.2025
(51) Int. Cl.: H02J 7/00, H01M 10/6235, H01M 50/24

(54) **LADESYSTEM FÜR EINEN AKKUMULATOR**

(71) Anmelder: Hilti Aktiengesellschaft, 9494 Schaan (LI)
(72) Erfinder: Rank, Markus, 86807 Buchloe (DE); Ziegler, Bernd, 86830 Schwabmünchen (DE); Weydanz, Wolfgang, 91054 Buckenhof (DE); Gawel, Krzysztof, 80687 München (DE); Götz, Gregor, 76131 Karlsruhe (DE); Grützner, Julian, 76131 Karlsruhe (DE); Blum, Patrick, 76133 Karlsruhe (DE); Kleinschmidt, Albert, 75031 Eppingen (DE); Ballreich, Moritz, 76131 Karlsruhe (DE)
(74) Vertreter: Hilti Aktiengesellschaft Corporate Intellectual Property

(57) **Zusammenfassung**

Die vorliegende Erfindung betrifft ein Ladesystem zum Laden zumindest eines Akkumulators für eine mobile Werkzeugmaschine, insbesondere eine tragbare Werkzeugmaschine, enthaltend: ein Ladegerät, das zumindest eine Schnittstelle hat, die zum Koppeln eines Akkumulators und zum elektrischen Laden eines daran gekoppelten Akkumulators eingerichtet ist, und eine zwischen zumindest zwei Lagen räumlich veränderbare Abschirmung, wobei in einer Lage die Abschirmung die Schnittstelle zum Koppeln eines Akkumulators freigibt und in einer anderen Lage die Abschirmung dazu eingerichtet ist, die Schnittstelle in einem gekoppelten Zustand, in welchem ein Akkumulator mit der Schnittstelle gekoppelt ist, allseitig gegen Spritzwasser abzuschirmen.

## Beschreibung

### GEBIET DER ERFINDUNG

Die vorliegende Erfindung betrifft ein Ladesystem zum Laden zumindest eines Akkumulators für eine mobile Werkzeugmaschine.

Mobile Werkzeugmaschinen lassen sich grob in die drei Hauptgruppen der quasi-stationären Werkzeugmaschinen (beispielsweise Kernbohrmaschinen oder tragbare Tischkreissägen), tragbaren Werkzeugmaschinen (beispielsweise Bohrhämmer, Handkreissägen oder Heckenscheren) und schiebbaren Werkzeugmaschinen (beispielsweise Rasenmäher oder Poliermaschinen) gliedern, wobei auch Mischformen und andere Werkzeugmaschinen, wie Bauroboter, vorkommen können. Prinzipiell lassen sich alle solche Werkzeugmaschinen mittels Akkumulatoren betreiben, wobei es sich aus Flexibilitätsgründen anbietet, standardisierte Akkumulatoren, wie Hersteller-standardisierte Akkumulatoren, zu verwenden.

Bei bekannten Ladegeräten befindet sich eine Schnittstelle (Interface) zum Koppeln und Laden eines Akkumulators bzw. ein daran zum Laden gekoppelter Akkumulator über dem Ladegerät oder von oben zugreifbar seitlich an dem Ladegerät.

Das Laden solcher Akkumulatoren nahe des jeweiligen Einsatzortes bietet sich an, um Laufwege zu sparen. Befindet sich der Einsatzort jedoch im Freien, sind der Akkumulator, das Ladegerät und insbesondere dessen Schnittstelle je nach Wetter Regen und Spritzwasser ausgesetzt. Vergleichbares gilt für Einsatzorte wie Rohbauten.

Eine Aufgabe der vorliegenden Erfindung ist es daher, ein Mittel zum Laden eines Akkumulators im Freien bereitzustellen.

### OFFENBARUNG DER ERFINDUNG

Demgemäß wird ein Ladesystem zum Laden zumindest eines Akkumulators für eine mobile Werkzeugmaschine, insbesondere eine tragbare Werkzeugmaschine, vorgeschlagen. Das Ladesystem hat zumindest ein Ladegerät und eine Abschirmung. Das Ladegerät hat zumindest eine Schnittstelle bzw. Ladeschnittstelle. Die Schnittstelle ist zumindest zum Koppeln eines Akkumulators und zum elektrischen Laden eines daran gekoppelten Akkumulators eingerichtet. Die Abschirmung ist zwischen zumindest zwei Lagen räumlich veränderbar. In einer Lage gibt die Abschirmung die Schnittstelle zum Koppeln eines Akkumulators frei. In einer anderen Lage ist die Abschirmung dazu eingerichtet, die Schnittstelle zumindest in einem gekoppelten Zustand allseitig gegen Spritzwasser abzuschirmen. In dem gekoppelten Zustand ist ein Akkumulator mit der Schnittstelle gekoppelt.

Die räumliche Veränderbarkeit der Abschirmung ermöglicht also zwischen einem Zustand, in welchem man auf die Schnittstelle des Ladegeräts zugreifen kann, und einem Zustand zu wechseln, in welchem die Schnittstelle beim Laden eines gekoppelten Akkumulators gegen Spritzwasser geschützt ist. Somit ist das Ladesystem ein Mittel zum Laden eines Akkumulators im Freien.

Unter dem "Akkumulator" kann man einen Speicher für elektrische Energie verstehen, der bauartgemäß zum mehrmaligen, auch teilweisen, Auf- und Entladen geeignet und bestimmt ist. Unter dem "Akkumulator für eine mobile Werkzeugmaschine" kann man einen Akkumulator verstehen, der bis zum Betrieb einer Werkzeugmaschine mit einer Nennleistung bis 10 kW bevorzugt bis 5kW und bevorzugter bis 2,5 kW dimensioniert ist. Unter dem "Akkumulator für eine mobile Werkzeugmaschine" kann man einen Akkumulator mit einer Kapazität bis 50 Ah und bevorzugter bis 20 Ah verstehen. Der Akkumulator hat eine Gegenschnittstelle, die zu der Schnittstelle des Ladegeräts komplementär ist, man kann auch von gegengleichen und/oder zueinander funktional bzw. geometrisch negativen Schnittstellen sprechen.

Der Akkumulator ist beispielsweise eine Akkumulatorvorrichtung, die zumindest eine Akkumulatorzelle oder mehrere Akkumulatorzellen, ein die Akkumulatorzelle/-n umgebendes Gehäuse und eine an dem Gehäuse angeordnete Gegenschnittstelle hat. In der Akkumulatorvorrichtung kann ein Lüftungskanal zum Lüften eines Inneren des Gehäuses gebildet sein, um die Akkumulatorzellen zu kühlen und/oder zu wärmen. Die Akkumulatorvorrichtung kann eine Steuereinheit haben, die beispielsweise zum Steuern eines Aufladens und/oder eines Entladens der Akkumulatorzellen eingerichtet ist, beispielsweise um ein Tiefenentladen einzelner Akkumulatorzellen zu vermeiden und/oder eine Temperaturverteilung während eines Auf- und/oder Entladens zu steuern. Die Steuereinheit kann mit zumindest einem Sensor in der Akkumulatorvorrichtung verbunden sein, um diesen auszulesen, beispielsweise einem Spannungssensor und/oder einem Temperatursensor. Es kann sein, dass der Lüftungskanal zum Umströmen zumindest eines Teils der Akkumulatorzelle/-n angeordnet ist. wobei der Lüftungskanal vorzugsweise eine Mündung und noch bevorzugter beide Mündungen im Bereich der Gegenschnittstelle hat.

Unter der "mobilen Werkzeugmaschine" kann einen Manipulator, insbesondere einen mehrachsigen Manipulator, aufweisen. Die mobile Werkzeugmaschine kann eine Antriebsvorrichtung zum Antrieb eines Werkzeugs, beispielsweise eines Bohrers, eines Meißels, eines Saugers oder dergleichen aufweisen. Die mobile Werkzeugmaschine kann beispielsweise zur Bearbeitung von Stein, wie Beton, und/oder Metall und/oder Holz eingerichtet sein. Sie kann beispielsweise zum Bohren, Meißeln, Sägen und / oder Schleifen ausgebildet sein. Allgemein kann die mobile Werkzeugmaschine zur Ausführung von Arbeiten im Gartenbau, Hochbau und/oder Tiefbau eingerichtet sein. Denkbar ist, dass sie nicht für einen Einsatz im Bergbau eingerichtet ist. Die mobile Werkzeugmaschine kann tragbar sein; sie kann beispielsweise ein Gewicht von weniger als 50 kg, insbesondere von weniger als 25 kg, aufweisen.

Unter dem "Ladesystem" kann man verstehen, dass das Ladegerät und die Abschirmung zumindest aufeinander abgestimmt sind. Es kann sein, dass das Ladegerät und die Abschirmung beispielsweise trennbar oder beispielsweise dauerhaft miteinander verbunden sind. Es kann sein, dass das Ladegerät in die Abschirmung integriert oder eingebaut ist. Es kann sein, dass ein Akkumulator Teil des Ladesystems ist, jedoch ist jeder Akkumulator zweckgemäß von dem Ladesystem trennbar. Das Ladesystem kann weitere Dinge enthalten, beispielsweise ein Netzkabel oder eine Schnittstelle zum mechanischen Koppeln mit einem Stapelsystem, wie sie beispielsweise sogenannte System-Werkzeugkoffer haben.

Unter dem "Ladegerät" kann man eine elektrische Einrichtung verstehen, die zumindest zum Aufladen eines Akkumulators eingerichtet ist. Unter der "Schnittstelle" kann man eine standardisierte und/oder proprietäre Schnittstelle verstehen. Unter dem "Koppeln" kann man im Allgemeinen Fall eine Verbindung mechanischer, elektrischer, fluidtechnischer, und/oder steuerungstechnischer Art verstehen. Im speziellen Fall der Schnittstelle des Ladegeräts handelt es sich bei dem "Koppeln" um eine Verbindung zumindest mechanischer und elektrischer Art. Unter dem "gekoppelten Zustand der Schnittstelle" kann man verstehen, dass ein Akkumulator an das Ladegerät gekoppelt ist, und zwar mittels der Schnittstelle des Ladegeräts und vorzugsweise der Gegenschnittstelle dieses Akkumulators. Es kann sein, dass der Akkumulator in dem "gekoppelten Zustand der Schnittstelle" durch das Ladegerät geladen wird.

Unter der "Abschirmung" kann man eine zum Abschirmen gegen Spritzwasser geeignete Einrichtung verstehen. Man kann sagen, dass die Abschirmung mechanisch abschirmt, also durch ihre Form ein Spritzen von Wasser in die Schnittstelle blockiert. Man kann von einer Abschirmeinrichtung sprechen. Es kann sein, dass mehrere Abschirmungen vorhanden sind und/oder dass die Abschirmung mehrere Teile oder (funktional betrachtet) mehrere Stufen hat.

Unter dem "räumlichen Verändern zwischen zumindest zwei Lagen" kann man verstehen, dass ein durch die ganze Abschirmung oder durch zumindest einen Teil der Abschirmung eingenommener Raum veränderbar ist. Beispielsweise kann es sein, dass die Abschirmung ganz oder teilweise verformbar, verschwenkbar, verfahrbar, aus- und/oder einfahrbar, verbiegbar, vergrößerbar und/oder verkleinerbar ist. Eine "Lage" kann man dabei als die räumliche Position und/oder Ausrichtung eines Abschnitts der Abschirmung verstehen.

Unter der Lage, in welcher die "Schnittstelle zumindest in einem gekoppelten Zustand" allseitig gegen Spritzwasser abgeschirmt wird, kann man eine Lage verstehen, in der die Schnittstelle nur in einem gekoppelten Zustand, also im Zusammenwirken mit dem an die Schnittstelle gekoppelten Akkumulator, abgeschirmt wird, wie auch eine Lage, in der die Schnittstelle auch ohne gekoppelten Akkumulator abgeschirmt wird.

Unter dem "Freigeben der Schnittstelle" kann man ein Nicht-Verlegen oder Nicht-Blockieren eines Pfads für den Akkumulator und/oder eine den Akkumulator führende Hand zum Koppeln des Akkumulators an die Schnittstelle des Ladegeräts verstehen. Man kann sagen, dass ein Weg für den Akkumulator zum Koppeln an die Schnittstelle frei ist.

Unter dem "Abschirmen gegen Spritzwasser" kann man eine Schutzart IPX4 oder höher gemäß DIN EN 60529 und/oder gemäß ISO 20653 und/oder ein Erfüllen einer entsprechenden Anforderung verstehen.

Es kann sein, dass das Ladesystem als die Abschirmung eine elastische Manschette hat, welche in elastisch dichtender Weise zwischen dem Ladegerät und einem an die Schnittstelle gekoppelten Akkumulator klemmbar ist. Es kann beispielsweise sein, dass die Manschette insgesamt elastisch ist, beispielsweise aus einem Elastomer. Es kann beispielsweise sein, dass die Manschette einen Grundkörper und einen oder zwei elastische Kragen zum dichtenden Anliegen jeweils an den Akkumulator und/oder an das Ladegerät hat. Es kann beispielsweise sein, dass die Manschette eine zu dem Ladegerät gegengleiche bzw. komplementär geformte Seite hat. Es kann beispielsweise sein, dass die Manschette eine zu einem an die Schnittstelle passenden Akkumulator gegengleiche bzw. komplementär geformte Seite hat. Es kann beispielsweise sein, dass die Manschette einen elastischen Grundkörper und ein Versteifungselement hat. Es kann beispielsweise sein, dass die Manschette ringartig geschlossen ist; "ringartig geschlossen" bedeutet vorzugsweise eine um einen Durchtritt herum kontinuierlich geschlossene Form und muss nicht eine Kreisringform sein. Es kann beispielsweise sein, dass Manschette eine Streifen-artige Form mit einem endseitigen Verschluss zum nachträglichen Schließen um die Schnittstelle in einem gekoppelten Zustand hat.

Es kann beispielsweise sein, dass das Ladegerät mehrere Schnittstellen zum Koppeln jeweils eines Akkumulators hat. In diesem Fall kann es beispielsweise sein, dass für zumindest eine Schnittstelle eine Manschette vorliegt. Falls für mehrere und/oder alle Schnittstellen jeweils eine einzelne Manschette vorliegt, können beispielsweise mehrere Akkumulatoren voneinander unabhängig gekoppelt und geladen werden. Falls für mehrere und/oder alle Schnittstellen eine gemeinsame Manschette vorliegt, wobei vorzugsweise für je eine Schnittstelle der mehreren Schnittstellen jeweils ein Durchtritt durch die Manschette gebildet ist bzw. vorliegt, können beispielsweise die mehreren Akkumulatoren voneinander unabhängig gekoppelt und geladen werden. Falls Akkumulatoren unterschiedlicher Form an dieselbe Schnittstelle koppelbar sind, ist es für eine Flexibilität vorteilhaft, unterschiedliche und zu je zumindest einer der unterschiedlichen Akkumulatorformen passende bzw. gegengleiche Manschetten zu haben.

Es kann sein, dass die Schnittstelle zumindest eine Lüftungsöffnung hat, die zum Belüften eines Innenvolumens eines mit einer korrespondierenden Lüftungsöffnung ausgestatteten Akkumulators vorbereitet ist, wobei die Manschette auch diese Lüftungsöffnungen umschließt, und zwar vorzugsweise luftdicht. Es wird mittels der Manschette vermieden, dass ein zum Temperieren des Akkumulators (d.h. Einstellen / Steuern / Regeln einer Temperatur des Akkumulators) erzeugter Luftstrom durch eine Undichtigkeit zwischen der Schnittstelle und der Gegenschnittstelle entweicht. Somit wird ein Wirkungsgrad des gesamten Ladenvorgangs verbessert.

Es kann sein, dass das Ladesystem als die Abschirmung eine Einhausung hat, wobei die Einhausung eine Klappe hat, wobei die Einhausung dazu eingerichtet ist, bei geschlossener Klappe die Schnittstelle samt eines an die Schnittstelle gekoppelten Akkumulators dicht bzw. zumindest spritzwasserdicht zu umschließen, und wobei die Klappe zum Koppeln eines Akkumulators an die Schnittstelle öffenbar ist. Eine solche Einhausung kann die Schnittstelle sowohl in einem gekoppelten Zustand (d.h. Akkumulator an Schnittstelle gekoppelt), als auch in einem entkoppelten Zustand (d.h. kein Akkumulator an Schnittstelle gekoppelt) vor Spritzwasser schützen. Dies vereinfacht eine Handhabung des Ladesystems.

Es kann sein, dass das Ladegerät ohne die Einhausung zum Laden eines daran gekoppelten Akkumulators betreibbar ist. Man kann auch von einem separat betreibbaren Ladegerät bzw. Stand-alone-Ladegerät sprechen. Somit kann zum Beispiel das Ladegerät in einer Werkstatt oder dergleichen komfortabel ohne Einhausung und im Freien betriebssicher mit Einhausung betrieben werden.

Es kann sein, dass die Einhausung an das Ladegerät angebracht oder anbringbar ist, und zwar vorzugsweise werkzeuglos. Das Ladegerät umschließt zusammen mit der Einhausung die Schnittstelle und einen für einen gekoppelten Akkumulator vorgesehenen Raum. Man kann beispielsweise von einer auf das Ladegerät stülpbaren und/oder aufsetzbaren und/oder an das Ladegerät anschließbaren Einhausung sprechen. Man kann sagen, dass die Einhausung das Ladegerät teilweise aufnimmt. Dies ist eine platzsparende Lösung. Außerdem kann eine solche Einhausung als Zubehör für das Ladegerät bei Bedarf nachgekauft werden. Es kann dabei sein, dass Bedienelemente wie ein Knopf, ein Schalter oder eine Anzeige außerhalb der Einhausung und damit leicht einsehbar und zugänglich bleiben.

Es kann sein, dass die Einhausung das Ladegerät umgibt. Man kann auch davon sprechen, dass die Einhausung das Ladegerät vollständig aufnimmt bzw. räumlich umschließt bzw. allseitig umgibt. Beispielsweise wird das Ladegerät in die Einhausung eingesetzt. Somit kann das ganze Ladegerät vor Spritzwasser geschützt werden. Vorzugsweise wird das Ladegerät in die Einhausung angebracht oder montiert, um während eines Transports festgelegt zu sein.

Es kann sein, dass die Einhausung eine spritzwassergeschützte Kabeldurchführung für ein Stromkabel des Ladegeräts hat. Dies ist beispielsweise nützlich für separate Ladegeräte mit nicht werkzeuglos lösbar angeschlossenem Stromkabel bzw. Netzkabel.

Es kann sein, dass das Ladegerät ein Steckerprofil zum Verbinden eines Stromkabels hat. In diesem Fall ist es bevorzugt, dass die Einhausung außen ein zu dem Ladegerät gleiches Steckerprofil und innen ein zu dem Ladegerät komplementäres Steckerprofil hat, wobei das äußere Steckerprofil mit dem inneren Steckerprofil elektrisch verbunden ist. Die Verbindung der Steckerprofile kann beispielsweise in einer Durchführung durch die Einhausung mit einem Kunststoff vergossen sein, was sehr zuverlässig spritzwassergeschützt (IPX4) bis hochdruckreinigergeschützt / dampfstrahlgeschützt (IPX9 bzw. IPX9K) ist.

Es kann sein, dass die Einhausung ein Kabel zur Stromversorgung des zumindest einen Ladegeräts und ggf. weiterer elektrischer Verbraucher in und/oder an der Einhausung hat, welches fest und spritzwassergeschützt (vorzugsweise untertauchdicht) durch die Einhausung geführt ist. Eine solche Durchführung kann beispielsweise vergossen und/oder als schließbarer Kragen ausgeführt sein. Es kann sein, dass die Einhausung einen von außen zugänglichen vorzugsweise nicht von innen zugänglichen und/oder nach innen spritzwassergeschützten (vorzugsweise untertauchdichten) Abschnitt zur Aufbewahrung des Kabels hat. Es kann sein, dass die Einhausung in diesem Einhausungs-Abschnitt eine Kabeltrommel hat. Der Einhausungs-Abschnitt kann sich in einer Betriebslage unten befinden. Die Kabeltrommel kann beispielsweise eingerichtet sein: zum Abrollen durch Zug an dem Kabel, zum Auf- und/oder Abrollen mittels einer Kurbel und/oder zum Aufrollen durch einen durch ein gezogenes Abrollen vorspannenden Mechanismus in dem Einhausungsabschnitt. Wenn das Kabel fest an der Einhausung ist, muss es nicht separat transportiert werden und die Durchführung ist am zuverlässigsten dicht. Wenn das Kabel an/in der Einhausung verstaubar ist, kann man eine Stolpergefahr reduzieren.

Vorzugsweise hat die Einhausung innen eine zu zumindest einem Abschnitt des Ladegeräts gegengleiche Aufnahme, um die Montage mittels Formschluss zu stärken. Man kann die Aufnahme ein Interface nennen. Vorzugsweise gibt es eine Aufnahmeeinrichtung zum Festlegen mehrerer Ladegeräte zueinander und zu der Einhausung, sodass eine Montage erleichtert ist. Die Aufnahme ist vorzugsweise zum Einstecken eines Ladegeräts eingerichtet.

Wenn die Einhausung an das Ladegerät angebracht ist und/oder dieses teilweise oder ganz umgibt, kann die Einhausung beispielsweise auch für eine Aufbewahrung und/oder einen Transport des Ladegeräts und des Akkumulators genutzt werden. Dieser Effekt ist umso stärker, je mehr Schnittstellen zum Laden das Ladegerät oder die Ladegeräte eines Ladesystems hat/haben.

Es kann sein, dass die Klappe abschließbar ist. Dies kann einer Verwechslung oder einem Diebstahl von Akkumulatoren vorbeugen.

Eine weitere Herausforderung beim Laden von Akkumulatoren im Freien kann darin liegen, dass ein Bereich einer Akkumulator-Temperatur zum sicheren und/oder effizienten und/oder raschen Aufladen eines Akkumulators enger / anders als ein auftretender Temperaturbereich ist. Der auftretende Temperaturbereich kann beispielsweise beeinflusst werden durch:
- eine Umgebungstemperatur, beispielsweise können Akkumulator-Temperaturen nahe und/oder unter dem Gefrierpunkt und/oder über beispielsweise 40°C beim Laden bzw. dessen Beginn unerwünscht sein,
- eine Sonneneinstrahlung, welche insbesondere während des Ladens als zusätzlicher Wärmeeintrag unerwünscht ist,
- eine Lagertemperatur des Akkumulators, beispielsweise in einem Fahrzeug, und/oder
- eine Restwärme des Akkumulators infolge eines Entladebetriebs.

Daher besteht der Wunsch nach einer Möglichkeit zum Kühlen und/oder zum Wärmen (d.h. zum Temperatureinstellen) des Akkumulators. Im Falle des Ladesystems, das eine Einhausung als Abschirmung gegen Spritzwasser hat, kommt hinzu, dass ein Luftaustausch mit Umgebungsluft durch die Abschirmung behindert sein kann.

Es kann sein, dass die Einhausung zumindest einen Wärmeübertrager zum Wärmeenergieübertragen zwischen einer Luft innerhalb und einer Luft außerhalb der Einhausung hat. Es kann sein, dass der Wärmeübertrager zum Kühlen einer Luft innerhalb der Einhausung eingerichtet ist, zum Wärmen einer Luft innerhalb der Einhausung eingerichtet ist, oder zum wahlweisen Kühlen oder Wärmen einer Luft innerhalb der Einhausung eingerichtet ist. Man kann den Wärmeübertrager auch eine Temperiereinheit nennen. Der Wärmeübertrager ist eine aktive Vorrichtung, die vorzugsweise mittels elektrischer Energie Wärme überträgt. Beispielsweise kann der Wärmeübertrager eine Peltier-Einrichtung, eine Kompressor-Kühleinrichtung, eine Heatpipe-Einrichtung, eine Radiator-Einrichtung, eine Kombination daraus und/oder eine andere Kühleinrichtung sein. Eine Peltier-Einrichtung wird bevorzugt, weil sie ohne mechanische Teile auskommt und daher vergleichsweise unempfindlich gegen Erschütterungen (Transport, unsachgemäße Handhabung) ist.

Es kann sein, dass in der Einhausung eine Heizung bzw. Heizeinrichtung vorhanden ist. Unter der Heizung wird eine Einrichtung verstanden, deren hauptsächliche Wirkung im Wandeln einer Quellenergie, bspw. elektrischer Energie, in Wärmeenergie liegt. Die Heizung kann beispielsweise in das Ladegerät integriert sein, um eine einfach handhabbare bauliche Einheit zu bilden. Es kann sein, dass das Ladegerät eingerichtet ist, um eine Temperatur eines gekoppelten Akkumulators zu fühlen und/oder auszulesen, und die Heizung in Abhängigkeit der Temperatur des gekoppelten Akkumulators zu steuern.

Es kann sein, dass die Einhausung zumindest eine spritzwassergeschützte Lüftungsöffnung hat. Die Lüftungsöffnung ist konstruktiv dazu eingerichtet, einen Luftaustausch zwischen innerhalb und außerhalb der Einhausung zu ermöglichen. Eine Lüftungsöffnung benötigt keine Energie zum Lüften. Die Lüftungsöffnung öffnet sich vorzugsweise in einer Seitenwand der Einhausung und/oder der Klappe. Vorzugsweise hat die Einhausung zumindest ein Paar Spritzwasser-geschützte Lüftungsöffnungen, die vorzugsweise einander gegenüber angeordnet sind.

Eine vorgeschlagene Ausführung der Lüftungsöffnung hat einen Lüftungskanal, welcher in einer Betriebslage von der Lüftungsöffnung aufwärts verläuft. Die "Betriebslage" wird beispielsweise durch eine Gestaltung der Einhausung und/oder des gesamten Ladesystems offenbar, beispielsweise durch eine Fußstruktur, durch eine Lage der Klappe und/oder der Schnittstelle/-n, und/oder durch einen Verlauf eben des Lüftungskanals oder einen gemeinsamen Verlauf der Lüftungskanäle. Weiterbildend wird vorgeschlagen, dass der Lüftungskanal oder einer der mehreren Lüftungskanäle in der Betriebslage aufwärts und abwärts verläuft. Man kann von einer gewinkelten Form des Lüftungskanals sprechen. Weiterbildend wird vorgeschlagen, dass der Lüftungskanal ausgebildet ist, um einen Wasserablauf in der Betriebslage nach unten zu haben.

Es kann sein, dass zumindest zwei Lüftungsöffnungen in der Einhausung vorgesehen sind, und wobei zumindest eine der Lüftungsöffnungen mit einer Gebläseeinrichtung in Reihe geschaltet ist. Dies ermöglicht eine gerichtete Luftströmung.

Es kann sein, dass die Gebläseeinrichtung eingerichtet ist, um mit einem Lüftungskanal eines Akkumulators in Reihe geschaltet zu sein, falls der Akkumulator an die Schnittstelle gekoppelt ist. Der Lüftungskanal des Akkumulators ist ein in dem Akkumulator gebildeter / vorhandener Lüftungskanal. Der Lüftungskanal des Akkumulators dient zum Kühlen und/oder Wärmen eines inneren Teils des Akkumulators. Dieses Kühlen/Wärmen hat einen besonders hohen Wirkungsgrad bzw. hebt und/oder senkt eine maßgebliche Temperatur des Akkumulator-Inneren vergleichsweise schnell.

Es kann sein, dass das Ladegerät die bzw. eine Gebläseeinrichtung enthält, wobei die Schnittstelle des Ladegeräts zumindest eine mit dieser Gebläseeinrichtung des Ladegeräts in Reihe geschaltete Lüftungsöffnung hat, die zum Belüften eines Innenvolumens eines mit einer korrespondierenden Lüftungsöffnung ausgestatteten Akkumulators vorbereitet ist. Mit anderen Worten, es kann sein, dass die Schnittstelle des Ladegeräts eine mit der Gebläseeinrichtung des Ladegeräts in Reihe geschaltete Lüftungsöffnung des Ladegeräts hat, welche zum Belüften eines Akkumulator-Inneren über eine Lüftungsöffnung eines jeweiligen gekoppelten Akkumulators eingerichtet ist, nämlich insbesondere über eine Lüftungsöffnung einer Gegenschnittstelle eines jeweilige gekoppelten Akkumulators. Dies ermöglicht beispielsweise eine kompakte Bauform.

Um einen gekoppelten Akkumulator aktiv zu kühlen, kann man beispielsweise die Gebläseeinrichtung zum Belüften des Akkumulatorinneren mit kühlerer Umgebungsluft (d.h. insb. kühler als der Akkumulator) anordnen & verschalten. Um einen Akkumulator aktiv zu kühlen, kann man beispielsweise die Gebläseeinrichtung zum Belüften des Einhausungsinneren mit kühlerer Umgebungsluft anordnen und verschalten. Um einen Akkumulator aktiv zu kühlen, kann man einen Wärmeübertrager in der Einhausung zum Wärmetransport nach außerhalb der Einhausung anordnen, wobei man diesen bevorzugt einer Gebläseeinrichtung zum Belüften des Akkumulatorinneren vorschaltet und/oder mit einer Gebläseeinrichtung zum Umwälzen von Luft innerhalb der Einhausung in Reihe schaltet. Die Liste ist nicht abschließend.

Es kann sein, dass das Ladesystem eingerichtet ist, um einen gekoppelten Akkumulator bei einer Umgebungslufttemperatur von mehr als 40°C, bevorzugter bei mehr als 35°C und noch bevorzugter bei mehr als 30°C aktiv zu kühlen. Dies verbessert einen Wirkungsgrad des Aufladens.

Um einen gekoppelten Akkumulator aktiv zu wärmen, kann man beispielsweise die Gebläseeinrichtung zum Belüften des Akkumulatorinneren mit wärmerer Umgebungsluft (d.h. insb. wärmer als der Akkumulator) anordnen & verschalten. Um einen Akkumulator aktiv zu wärmen, kann man beispielsweise die Gebläseeinrichtung zum Belüften des Einhausungsinneren mit wärmerer Umgebungsluft anordnen und verschalten. Um einen Akkumulator aktiv zu wärmen, kann man einen Wärmeübertrager in der Einhausung zum Wärmetransport nach innerhalb der Einhausung anordnen, wobei man diesen bevorzugt einer Gebläseeinrichtung zum Belüften des Akkumulatorinneren vorschaltet und/oder mit einer Gebläseeinrichtung zum Umwälzen von Luft innerhalb der Einhausung in Reihe schaltet. Außerdem kann man eine Heizeinrichtung, wie eine Widerstandsheizeinrichtung, in der Einhausung und/oder in Reihe mit der Gebläseeinrichtung anordnen. Man kann hierbei aktivem Vor-/Wärmen auf eine Ladestarttemperatur und/oder von aktivem Wärmen sprechen. Die Liste ist nicht abschließend. Es kann sein, dass das Ladesystem eingerichtet ist, um einen gekoppelten Akkumulator bei einer Umgebungslufttemperatur von bis zu 10°C und bevorzugt bis zu 5°C aktiv zu wärmen und/oder vorzuwärmen.

Es kann sein, dass die und/oder jede Lüftungsöffnung wahlweise und/oder antreibbar ver- und entsperrbar ist, beispielsweise mittels einer angetriebenen Sperrklappe und/oder einer angetriebenen Blende. Somit kann man beispielsweise zwischen einem Lüften mit Außenluft und einem Umwälzen einer (gewärmten und/oder gekühlten) Innenluft umschalten.

Es kann sein, dass das Ladesystem ein Kopplungsmittel enthält, welches zum elektrischen Koppeln eines weiteren Ladesystems vorbereitet ist. Dies kann ein elektrisches Kopplungsmittel sein, wie beispielsweise ein Kopplungskabel und/oder ein Kopplungsstecker. Dies kann ein mechanisches Kopplungsmittel sein, wie eine Klammereinrichtung und/oder eine Stapeleinrichtung. Auf diese Weise kann ein Anwender mehrere Ladesysteme räumlich und schaltungstechnisch zusammenlegen. Dies hilft dabei, auf einer Baustelle Ordnung zu halten und verringert Unfallquellen. Es kann ein thermisches Kopplungsmittel sein, wie beispielsweise ein Schlauchanschluss oder ein Steckanschluss zum Austausch temperierter Luft oder eine Wärmetauscherkopplung. Damit werden Betriebsmodi umsetzbar, wobei einzelne Akkumulatoren sehr rasch auf eine gewünschte Temperatur gebracht oder trotz sehr schnellem Aufladen auf einer gewünschten Temperatur gehalten werden können. Es kann auch jede Kombination aus einem elektrischen, einem mechanischen und/oder einem thermischen Kopplungsmittel vorliegen.

Es kann sein, dass das Ladesystem ein Steuergerät hat. Damit kann man beispielsweise ein ungesteuertes Ladegerät verwenden und/oder eine Koordination zwischen Ladegeräten vornehmen.

Es kann sein, dass das Steuergerät des Ladesystems zumindest eine Schnittstelle hat, um eine in das Ladegerät integrierte Steuerung zu steuern bzw. anzuweisen. Somit kann beispielsweise das Ladegerät genutzt werden, und die Ladesystem-Steuerung kann auf übergreifende buw. Übergeordnete Steuerungsaufgaben beschränkt werden. Auf diese Weise kann man beispielsweise bestehende Ladegeräte in das Ladesystem integrieren.

Es kann sein, dass das Steuergerät eine Kommunikationseinrichtung hat, um einem Benutzer eine Mitteilung an ein Endgerät zu senden und/oder auf eine Abfrage von dem Endgerät an das Endgerät zu antworten. Es kann sein, dass das Steuergerät als die Kommunikationseinrichtung ein WLAN-Mittel, ein Bluetooth-Mittel, ein NFC-Mittel (Nachbereichskommunikationsmittel bzw. Mittel zur near field communication) und/oder ein Mobilfunkmittel hat. Somit ist beispielsweise eine Geräteparkverwaltung und/oder eine Übersichtlichkeit umsetzbar.

Es kann sein, dass das Steuergerät eingerichtet ist, um einen Indikator für einen Ladestand zumindest eines und/oder jedes zum Laden mit dem Ladegerät und/oder mit zumindest einem der Ladegeräte gekoppelten Akkumulators auszugeben. Es kann sein, dass das Steuergerät eingerichtet ist, um einen Indikator für eine Stromaufnahme des Ladesystems an einem Ausgabemittel auszugeben. Es kann sein, dass das Ausgabemittel an dem Steuergerät, an einer Außenfläche der Einhausung und/oder an einem mittels einer bzw. der Kommunikationseinrichtung verbundenen oder verbindbaren Endgerät vorhanden ist. Es kann sein, dass der Indikator ein Lichtsignal, ein Geräuschsignal und/oder ein haptisches Signal ist oder enthält. Der Ladestand eines Akkumulators und die Stromaufnahme des Ladesystems können einem Benutzer einen Überblick über die Bereitschaft und den Betrieb des Ladesystems und des damit gekoppelten Akkumulators / der damit gekoppelten Akkumulatoren geben.

Es kann sein, dass das Steuergerät eingerichtet ist: zum Steuern eines Aufladens eines mit dem Ladegerät gekoppelten Akkumulators. Im Gegensatz zu einem ungesteuerten Aufladen kann effizienter aufgeladen werden. Das Steuergerät ist vorzugsweise zum Steuern eines Aufladens in Abhängigkeit einer Außentemperatur, einer Innentemperatur der Einhausung und/oder einer Temperatur dieses Akkumulators eingerichtet. Somit kann auch in thermisch anspruchsvollen Situationen optimal aufgeladen werden.

Es kann sein, dass das Steuergerät eingerichtet ist: zum Steuern einer Reihenfolge eines Ladens mehrerer mit dem Ladegerät und/oder einem der Ladegeräte und/oder einem Ladegerät eines elektrisch gekoppelten weiteren Ladesystems in Abhängigkeit einer Außentemperatur, einer Innentemperatur der Einhausung oder Innentemperaturen der Einhausungen, Temperaturen der Akkumulatoren, einer zur Verfügung stehenden Menge elektrischer Energie oder in elektrische Energie wandelbarer Energie. Auf diese Weise kann einem Anwender möglichst schnell ein aufgeladener Akkumulator bereitgestellt werden.

Es kann sein, dass das Steuergerät eingerichtet ist: zum Überwachen einer Innentemperatur der Einhausung und/oder einer Innentemperatur einer Einhausung eines elektrisch gekoppelten weiteren Ladesystems und/oder einer Temperatur eines bzw. jedes mit dem bzw. jedem Ladegerät gekoppelten Akkumulators und zum Ausgeben eines Warnsignals in Abhängigkeit eines Vergleichs der jeweiligen überwachten Temperatur oder Temperaturen und/oder dessen Verlaufs oder deren Verläufe mit einem jeweils zum Verhindern eines Überschreitens einer Ladehöchsttemperatur und/oder einer Lagerhöchsttemperatur bemessenen Schwellwert. Auf diese Weise kann zum Beispiel eine Betriebssicherheit erhöht werden.

Es kann sein, dass das Steuergerät eingerichtet ist, um eine Aufnahmestromstärke unter einen vorgebbaren Wert anzupassen. Es kann sein, dass das Steuergerät zur Kommunikation mit einem Steuergerät eines anderen Ladesystems eingerichtet ist, sodass die Aufnahmestromstärken der Ladesysteme gemeinsam den vorgebbaren Wert nicht übersteigen. Somit kann beispielsweise ein Überlasten einer Baustromquelle vermieden werden.

Es kann sein, dass das Steuergerät in der Klappe angeordnet ist. Es kann sein, dass das Steuergerät an einer Bodenfläche der Einhausung angeordnet ist. In beiden Fällen wird eine Querschnittsfläche zum Anordnen des Akkumulators / der Akkumulatoren freigehalten und kann damit optimal genutzt werden.

Es kann sein, dass das Steuergerät zu dem Ladesystem separat ausgebildet und mit dem Ladesystem elektronisch koppelbar ist. Vorzugsweise ist das Steuergerät zu mehreren Ladesystemen elektronisch koppelbar. Somit kann man beispielsweise das Steuergerät als einen Verteiler elektrischen Stroms zu den ggf. mehreren Ladesystemen einsetzen. Dies reduziert beispielsweis einen Verkabelungsaufwand. Das separat ausgebildete Steuergerät stellt auch einen eigenständigen Aspekt der Erfindung dar und kann bspw. unabhängig beansprucht werden.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird die Fachperson auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

### KURZE BESCHREIBUNG DER FIGUREN

Die nachfolgende Beschreibung erläutert die Erfindung anhand von exemplarischen Ausführungsformen und Figuren. In den Figuren zeigt:

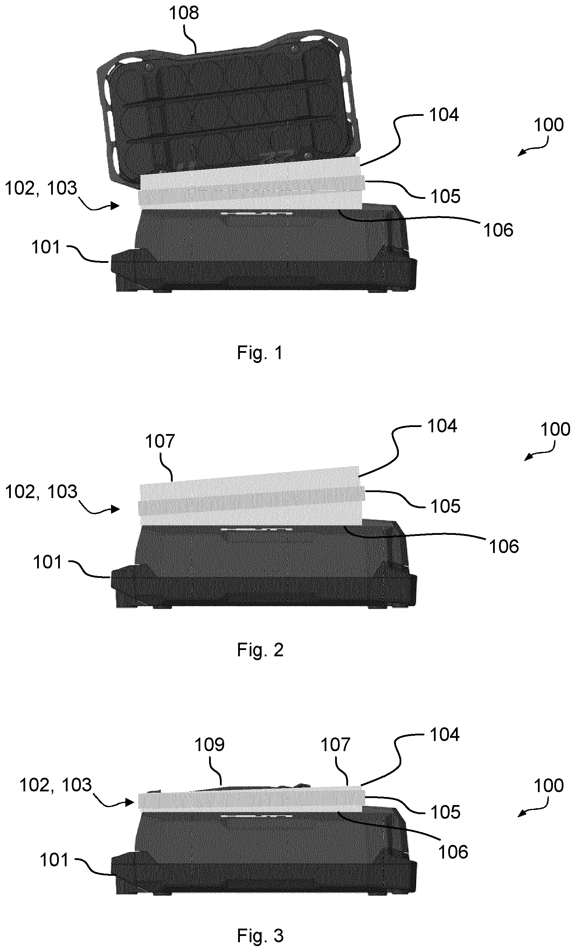

- Fig. 1: schematisch in einer Seitenansicht ein Ladesystem einer ersten Ausführungsform enthaltend ein Ladegerät und eine Manschette, wobei ein Akkumulator an eine Schnittstelle des Ladegeräts gekoppelt ist, und wobei die Manschette die Schnittstelle abschirmt;
- Fig. 2: schematisch in einer Seitenansicht das Ladesystem der ersten Ausführungsform, wobei kein Akkumulator mit dem Ladegerät gekoppelt ist, sodass die Manschette entspannt ist;
- Fig. 3: schematisch in einer Seitenansicht das Ladesystem der ersten Ausführungsform, wobei zwar kein Akkumulator mit dem Ladegerät gekoppelt ist, aber die Manschette stärker als in der Fig. 1 zusammengedrückt wird, um ein Einschieben des Akkumulators in die Manschette zu ermöglichen/erleichtern;

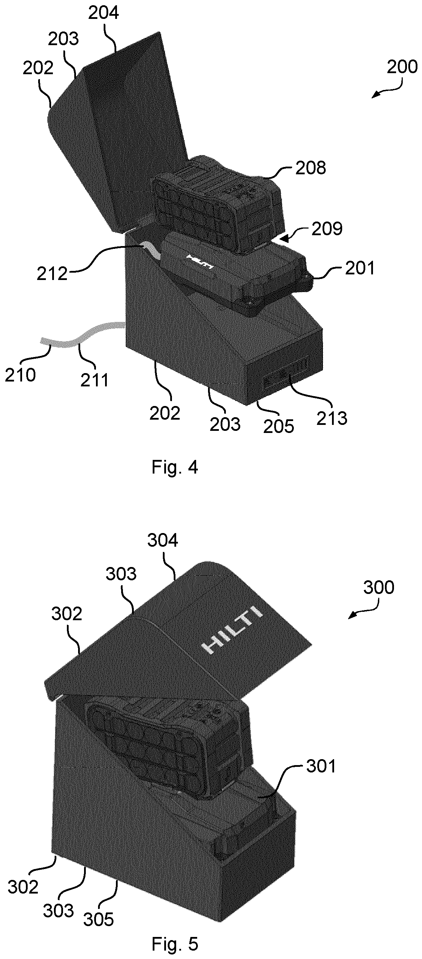

- Fig. 4: schematisch eine perspektivische Ansicht auf ein Ladesystem einer zweiten Ausführungsform enthaltend ein Ladegerät und eine Einhausung, welche eingerichtet ist, um das Ladegerät alleine oder mit einem daran gekoppelten Akkumulator allseitig zu umgeben und dadurch gegen Spritzwasser abzuschirmen;
- Fig. 5: schematisch eine perspektivische Ansicht eines Ladesystems einer dritten Ausführungsform enthaltend ein Ladegerät, das in eine Einhausung integriert ist, welche eingerichtet ist, um eine Schnittstelle des Ladegeräts ohne oder mit einem daran gekoppelten Akkumulator allseitig zu umgeben und dadurch gegen Spritzwasser abzuschirmen;

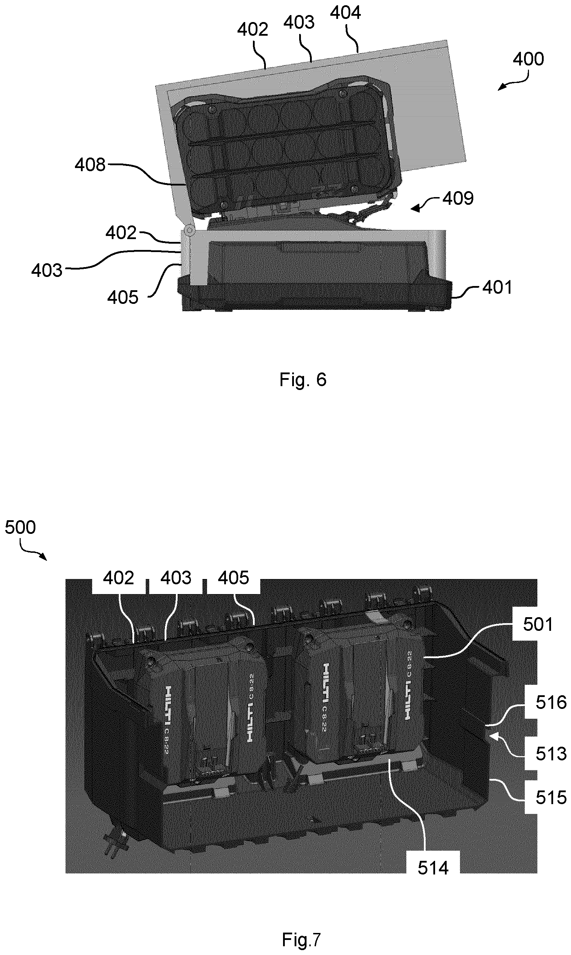

- Fig. 6: schematisch eine seitliche, teilgeschnittene Ansicht eines Ladesystems einer vierten Ausführungsform enthaltend ein Ladegerät, das teilweise von einer Einhausung umgeben ist, welche eingerichtet ist, um eine Schnittstelle des Ladegeräts ohne oder mit einem daran gekoppelten Akkumulator allseitig zu umgeben und dadurch gegen Spritzwasser abzuschirmen;
- Fig. 7: schematisch eine perspektivische teilgeschnittene Ansicht eines Ladesystems einer fünften Ausführungsform enthaltend eine Einhausung und darin angeordnete Ladegeräte, wobei die Einhausung dazu eingerichtet ist, die Ladegeräte ohne oder mit daran gekoppelten Akkumulatoren gegen Spritzwasser abzuschirmen;

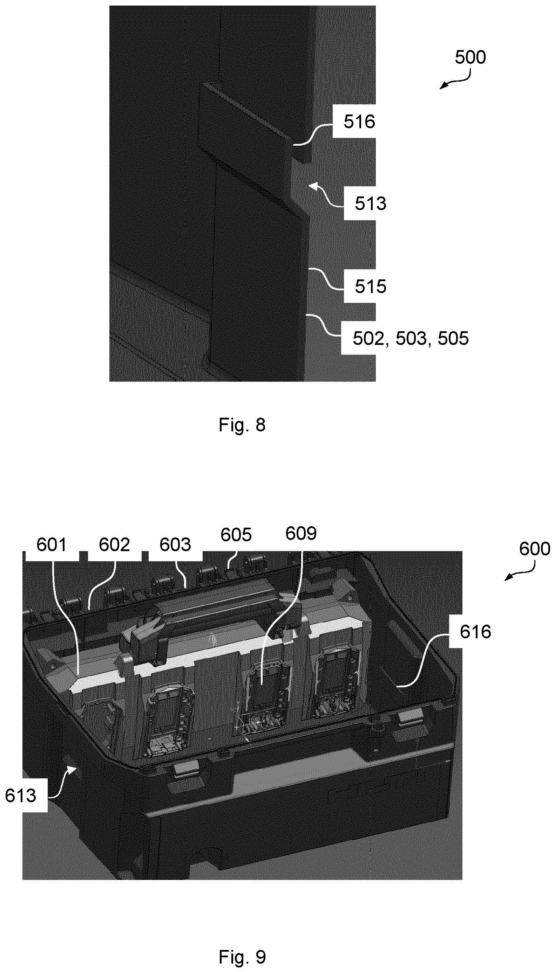

- Fig. 8: zeigt einen vergrößerten Ausschnitt der Fig. 7, um eine Lüftungsöffnung mit einem daran anschließend aufwärts verlaufenden Lüftungskanal zu zeigen;
- Fig. 9: schematisch eine perspektivische Ansicht eines Teils eines Ladesystems einer sechsten Ausführungsform enthaltend eine Einhausung und ein darin angeordnetes Ladegerät, wobei die Einhausung dazu eingerichtet ist, das Ladegerät ohne oder mit daran gekoppelten Akkumulatoren gegen Spritzwasser abzuschirmen;

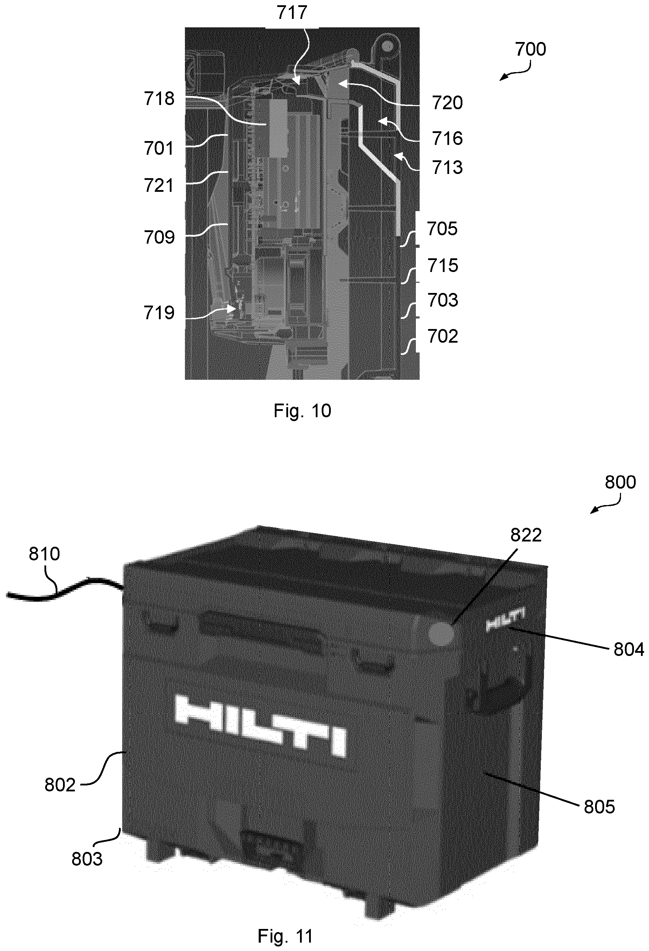

- Fig. 10: schematisch eine geschnittene Ansicht eines Teils eines Ladesystems einer siebten Ausführungsform, wobei eine Einhausung und ein darin angeordnetes Ladegerät gezeigt werden, wobei die Einhausung eine Lüftungsöffnung und daran anschließend einen aufwärts führenden Lüftungskanal hat, der eine innenliegende Lüftungsöffnung hat, die mit einer Lüftungsöffnung des Ladegeräts deckt; und
- Fig. 11: schematisch eine perspektivische Ansicht einer Einhausung eines Ladesystems einer achten Ausführungsform, an welcher ein Kabel und eine Anzeige angeordnet sind.

Gleiche oder funktionsgleiche Elemente werden durch gleiche Bezugszeichen in den Figuren indiziert, soweit nichts anderes angegeben ist.

### AUSFÜHRUNGSFORMEN DER ERFINDUNG

Die Fig. 1 bis 3 zeigen ein Ladesystem 100 gemäß einer ersten Ausführungsform der Erfindung. Das Ladesystem 100 enthält ein Ladegerät 101 und eine Abschirmung 102.

Die Abschirmung 102 ist beispielhaft als eine zweiteilige Manschette 103 ausgeführt. Die Manschette 103 hat nämlich einen elastische Ring 104 und diesen umfänglich umschließend eine Schelle 105. Diese Manschette 103 ist somit eine Baugruppe. Der Ring 104 hat beispielsweise ein abgerundet rechteckige Form. Die elastische Manschette 104 ist aus einem Kunststoff, vorzugsweise einem Elastomer gebildet. Die Manschette 104 kann beispielsweise aus einem massiven Material oder aus einem geschlossenporigen Material gebildet sein. Die Schelle 105 kann beispielsweise aus einem Metall oder einem wenig nachgiebigen bis nicht nachgiebigen Kunststoff gebildet sein. Die Schelle 105 kann beispielsweise justierbar sein, sodass ein Umfang der Manschette 103 anpassbar ist.

Durch die Elastizität des elastischen Rings 104 der Manschette 103 ist der Ring 104 insgesamt verformbar, seine Form kann also zwischen mehreren Lagen räumlich verändert werden. In den Fig. 1 bis 3 liegt eine untere Stirnseite 106 der Manschette 103 an das Ladegerät 101 an.

Die Fig. 2 zeigt den Ring 104 in einem entspannten Zustand. Wegen des entspannten Zustands des Rings 104 ist eine Lage einer oberen Stirnseite 107 der Manschette 103 von dem Ladegerät 101 weiter als in den Zuständen der Fig. 1 und 3 entfernt.

Die Fig. 3 zeigt den Ring 104 in einem stark komprimierten Zustand. In diesem stark komprimierten Zustand des Rings 104 ist eine Lage der oberen Stirnseite 107 der Manschette näher an dem Ladegerät 101 als in den Zuständen der Fig. 1 und 2. In dieser Lage kann ein Akkumulator 108 besonders einfach mit einer Schnittstelle 109 des Ladegeräts 101 gekoppelt werden. Die Manschette 103 gibt somit in dieser Lage die Schnittstelle 109 zum Koppeln eines Akkumulators 108 frei.

Die Fig. 1 zeigt den Akkumulator 108 mit der Schnittstelle 109 des Ladegeräts 101 gekoppelt. Der Ring 104 ist weniger stark komprimiert als in dem Zustand der Fig. 3 und stärker komprimiert als in dem Zustand der Fig. 2. Man kann sagen, dass der Ring 104 in Fig.1 in einem teilentspannten Zustand vorliegt. Die Lage der oberen Stirnseite 107 ist dementsprechend näher an dem Ladegerät 101 als in dem Zustand der Fig. 2 und weiter entfernt als in dem Zustand der Fig. 3. Wegen der Kompression des Rings 104 liegt dieser vorgespannt an das Ladegerät 101 und den Akkumulator 108 an. Die Manschette 103 bildet somit eine Abschirmung, welche die Schnittstelle 109 des Ladegeräts 101 und eine verdeckte Gegenschnittstelle des Akkumulators 108 in dem gekoppelten Zustand gegen Spritzwasser schützt. Dies wirkt auch als Schutz von Ladekontakten gegen Staub und Schmutz.

Der Ring 104 ist elastisch, somit nachgiebig, und passt sich an die Formen des Ladegeräts 101 und des Akkumulators 108 an. Die Schelle 105 fixiert den Ring 104

Es gibt solche Ladegeräte 101 und Akkumulatoren 108 auch mit einer Lüftungsfunktion, die hauptsächlich dazu dient, ein Aufwärmen von Zellen des Akkumulators 108 zu mindern, indem Luft angesaugt, durch den Akkumulator geströmt und in die Umgebung abgegeben wird. Aus Gewichtsgründen ist es bevorzugt, ein Gebläse in dem Ladegerät 101 unterzubringen und von dort Luft zumindest über eine Lüftungsöffnung (Ausgang) des Ladegeräts 101 und eine entsprechende Lüftungsöffnung (Eingang) des Akkumulators 108 in den Akkumulator 108 zu blasen. Von dort kann die Luft dann direkt abgegeben werden, oder beispielsweise über ein weiteres Paar Lüftungsöffnungen zurück in das Ladegerät 101 gleitet und schließlich von dort abgegeben werden. In diesen Fällen wirkt die Manschette 103 als eine Dichtung, welche ein Entweichen von Kühlluft aus dem Bereich der Schnittstelle 109 in die Umgebung verhindert. Dies verbessert einen Wirkungsgrad des Ladevorgangs doppelt, nämlich durch besseres Kühlen und weniger Stromverbrauch zum Fördern von Luft. Entsprechendes gilt, falls die Lüftungsfunktion saugend ist.

Die Manschette 103 ist vorzugsweise von dem Ladegerät 101 trennbar, beispielsweise zur Reinigung oder Wartung.

Die Fig. 4 zeigt ein Ladesystem 200 gemäß einer zweiten Ausführungsform der Erfindung. Dieses Ladesystem 200 hat ein Ladegerät 201 und eine Abschirmung 202. Die Abschirmung 202 ist als eine Einhausung 203 ausgestaltet. Das Ladegerät 201 hat eine Schnittstelle 209, die zum mechanischen und elektrischen Koppeln eines Akkumulators 208 eingerichtet ist.

Die Einhausung 203 hat eine Klappe 204 und einen Gehäuseteil 205. Der Gehäuseteil 205 hat unterschiedlich hohe Seitenwände und einen Boden, sodass er (bis zur Oberkante der niedrigsten Seitenwand) eine Wannen-artige Form hat. Die Klappe 204 ist mittels eines Scharniers oder dergleichen an dem Gehäuseteil 205 festgelegt und um das Scharnier verschwenkbar. Die Klappe 204 ist somit zwischen einer geschlossenen Lage und einer vollständig geöffneten Lage verschwenkbar. In der geschlossenen Lage der Klappe 204 umgibt die Einhausung 203 das Ladegerät 210 und den Akkumulator 208 vollständig. Somit sind das Ladegerät 201, der Akkumulator 208 und die Schnittstelle 209 in dieser Lage durch die Einhausung 203 gegen Spritzwasser und sonstige widrige Umwelteinflüsse abgeschirmt. In der (vollständig) geöffneten Lage der Klappe 204 kann man auf die Schnittstelle 209 zugreifen, beispielsweise um diese zu reinigen oder den Akkumulator 208 damit zu koppeln oder davon zu entkoppeln.

Zum Verbessern einer Dichtigkeit der geschlossenen Klappe 204 ist an einem oberen Rand des Gehäuseteils 205 und/oder an einem unteren Rand der Klappe 204 eine Dichtung angebracht, beispielsweis eine Wulstdichtung aus einem Elastomer.

Wie man in der Fig. 4 erkennen kann, ist das Ladegerät 201 in die Einhausung 203 bzw. den Gehäuseteil 205 eingesetzt. Beispielsweise kann das Ladegerät 201 in die Einhausung 203 geschraubt sein. Das Ladegerät 201 kann aber auch entnommen und separat betrieben werden.

Das Ladesystem 200 enthält auch ein Netzkabel 210. Das Netzkabel 201 hat einen Kabelteil 211 außerhalb der Einhausung 203 und einen Kabelteil 212 innerhalb der Einhausung 203. Der Kabelteil 211 außerhalb der Einhausung 203 hat einen Netzstecker (nicht gezeigt). Der Kabelteil 212 innerhalb der Einhausung 203 hat einen Ladegerätstecker (nicht gezeigt). Das Netzkabel 201 ist in einer Durchführung (nicht gezeigt) durch die Einhausung 203 vergossen. Das Netzkabel 201 ist beispielsweise in das Ladegerät 201 gesteckt.

Die Einhausung 203 hat im vorliegenden Beispielfall eine Lüftungsöffnung 213 an einer Vorderseite der Einhausung 203 und eine weitere Lüftungsöffnung (nicht gezeigt) an einer Rückseite der Einhausung 203. Das Ladegerät kann beispielsweise über einen doppelten Boden der Einhausung 203 Luft von der vorderen Lüftungsöffnung 213 anziehen und durch den Akkumulator 208 blasen. Die Luft kann dann durch die hintere Lüftungsöffnung austreten. Somit kann der Akkumulator 208 zum Laden bei warmen Umgebungsbedingungen oder restwarmen Zellen mittels gerichteter ventilierter Umgebungsluft gekühlt werden.

Es kann auch sein, dass keine Lüftungsöffnung vorhanden ist. Dann kann ein Luftaustausch zur Kühlung des Akkumulators 208 bei geschlossener Klappe 204 nicht stattfinden. Im Gegenteil wird der Akkumulator 208 durch ein Laden in der Einhausung 203 zuverlässig erwärmt. Dies verbessert einen Wirkungsgrad des Akkumulators 208 bei winterlichen Umgebungsbedingungen. Man kann von einer Luftumwälzung sprechen.

Es kann auch sein, dass die Einhausung 203 eine Temperiereinrichtung hat. Beispielsweise ist in einer Rückwand der Einhausung ein Peltierelement vorsehbar, welches zum Wärmetransport zwischen einer Luft in der Einhausung 203 und einer Luft außerhalb der Einhausung 203 eingerichtet und angeordnet ist.

Die Einhausung 203 kann aus einem feuerhemmenden Material gebildet und/oder damit innen ausgekleidet sein, um eine Sicherheit zu erhöhen.

Die Einhausung 203 kann ganz oder teilweise mit einer reflektierenden Beschichtung außen versehen und/oder aus einem reflektieren Material gebildet sein. Beispielsweise kann reflektierender Lack verwendet werden. Somit kann ein Akkumulator 208 beim Laden / Aufbewahren in de Einhausung vor Aufheizen bzw. übermäßigem Erwärmen infolge von Sonneneinstrahlung geschützt werden. Im Übrigen wird auf die oben beschriebene Ausführungsform verwiesen.

Die Fig. 5 zeigt ein Ladesystem 300 einer dritten Ausführungsform der Erfindung. Das Ladesystem 300 hat ein Ladegerät 301, welches in eine Abschirmung 302 integriert ist. Die Abschirmung 302 ist ansonsten als Einhausung 303 enthaltend eine Klappe 304 und einen Gehäuseteil 305 ausgestaltet, es wird auf die Beschreibung der zweiten Ausführungsform verwiesen.

Die Fig. 6 zeigt ein Ladesystem 400 einer vierten Ausführungsform der Erfindung. Das Ladesystem 400 hat ein Ladegerät 401 und eine Abschirmung 402. Die Abschirmung 402 ist auf das Ladegerät 401 aufgesetzt. Man kann auch sagen, dass das Ladegerät 401 teilweise in der Abschirmung 402 aufgenommen ist. Eine Schnittstelle 409 des Ladegeräts 401 zum Koppel eines Akkumulators 408 befindet sich innerhalb der Abschirmung 402. Die Schnittstelle 409 ist allseitig von dem Ladegerät 401 und der Abschirmung 402 umgeben. Die Abschirmung 402 ist als Einhausung 403 enthaltend eine Klappe 404 und einen Gehäuseteil 405 ausgestaltet. Der Gehäuseteil 405 hat keinen Boden, ansonsten wird auf die Beschreibung der zweiten Ausführungsform und dritten Ausführungsform verwiesen.

Die Fig. 7 zeigt einen Ausschnitt eines Ladesystems 500 einer fünften Ausführungsform der Erfindung. Das Ladesystem 500 hat mehrere Ladegeräte 501 und eine Abschirmung 502. Die Abschirmung 502 ist als eine Einhausung 503 in Form einer Kiste gebildet. Die Einhausung 503 hat eine Wanne 505 und einen nicht gezeigten Deckel.

Innen in der Wanne 505 sind mehrere Aufnahmen 514 für je ein Ladegerät 501 gebildet. Die Aufnahmen 514 sind jeweils als negative bzw. komplementäre Form eines Teils des jeweilige Ladegeräts 501 gebildet.

Ein in die jeweilige Aufnahme 514 aufgenommenes bzw. gestecktes bzw. gestelltes Ladegerät 501 ist so orientiert, dass eine Schnittstelle 509 des jeweiligen Ladegeräts 501 ausgerichtet ist, um einen von oben in die Einhausung eingeführten (nicht gezeigten) Akkumulator damit koppeln zu können. Diese Wirkung ist unabhängig von der Zahl der Ladegeräte 501 und/oder Schnittstellen 509.

Wenn der Deckel geschlossen ist, schirmt er daher die Schnittstellen 509 gegen Spritzwasser und dergleichen ab. Somit ist der Deckel der Einhausung 503 zwischen zwei Lagen räumlich veränderbar (verschwenkbar), nämlich einer geöffneten Lage zum Zugreifen-Können auf die Schnittstellen 509 und einer geschlossenen Lage zum Abschirmen der Schnittstellen 509 gegen Spritzwasser.

Die Fig. 8 zeigt einen vergrößerten Ausschnitt der Fig. 7. Zu erkennen ist eine Seitenwand 515 der Wanne 505. In der Seitenwand 515 ist eine Lüftungsöffnung 513 eingebracht. Die Lüftungsöffnung 513 ist beispielsweise als Durchgriff durch die Seitenwand 515 ausgebildet. An einer Innenseite der Seitenwand 515 schließt sich ein Lüftungskanal 516 an. Der Lüftungskanal 516 verläuft von der Lüftungsöffnung 513 aus nach oben bzw. aufwärts. Somit schützt er die Schnittstellen 509 zuverlässig gegen Spritzwasser, welches die Lüftungsöffnung 513 treffen könnte.

Wie man der Fig. 8 entnehmen kann, ist eine (unterste) Oberkante des Lüftungskanals 516 mehr als eine Lüftungskanalbreite (Richtung senkrecht zur Seitenwand 515) höher als eine (oberste) Oberkante der Lüftungsöffnung 513. Dies verbessert nochmals deutlich die Spritzwasser-abschirmende Wirkung des Lüftungskanals 516. Im Übrigen wird auf die oben beschriebenen Ausführungsformen verwiesen.

Die Fig. 9 zeigt ein Ladesystem 600 gemäß einer sechsten Ausführungsform der Erfindung. Das Ladesystem 600 hat ein Ladegerät 601 und eine Abschirmung 602. Das Ladegerät 601 hat mehrere Schnittstellen 609 zum Koppeln jeweils eines Akkumulators (nicht gezeigt). Die Abschirmung 602 ist als Einhausung 603 ausgeführt. Die Einhausung 603 ist in einer Kisten-Form bereitgestellt, und hat eine Wanne 605 und einen Deckel. Der Deckel ist in oben bereits beschriebener Weise räumlich verschwenkbar bzw. klappbar zwischen einer Lage, in welcher ein Nutzer auf die Schnittstellen 609 zugreifen kann, und einer Lage, in welcher die Schnittstellen 609 gegen Spritzwasser geschützt sind. Hinzuweisen ist auf seitliche Lüftungsöffnungen 613 und daran anschließende aufwärts verlaufende Lüftungskanäle 616. Im Übrigen wird auf die oben beschriebenen Ausführungsformen verwiesen.

Die Fig. 10 zeigt in Schnittansicht Teile eines Ladesystems 700 gemäß einer siebten Ausführungsform der Erfindung. Das Ladesystem 700 hat ein Ladegerät 701 und eine Abschirmung 702. Die Abschirmung 702 ist eine Einhausung 703 in Kisten-Form, und sie hat einen Deckel (nicht gezeigt) und eine Wanne 705. In einer Seitenwand 715 der Wanne 705 ist eine Lüftungsöffnung 713, an welche sich ein von der Lüftungsöffnung 713 aus aufwärts verlaufender Lüftungskanal 716 anschließt.

Das Ladegerät 701 hat einen bodenseitigen Lufteinlass 717 (eine Lüftungsöffnung), eine Gebläseeinrichtung 718 und einen Luftauslass 719 (eine Lüftungsöffnung), der sich im Bereich einer Schnittstelle 709 zum Koppeln eines Akkumulators (nicht gezeigt) befindet. Das Ladegerät 701 wird hierbei nicht liegend, sondern aufrecht neben der Seitenwand 715 angebracht, sodass sich der Lufteinlass 717 und Luftauslass 719 seitlich des Ladegeräts 701 öffnen.

Das Ladegerät 701 ist derart in der Wanne 705 angeordnet, dass der Lufteinlass 717 mit einer Mündung 720 des Lüftungskanals 716 fluchtet bzw. deckt. Auf diese Weise kann die Gebläseeinrichtung 718 Frischluft zum Kühlen eines Akkumulators durch die Lüftungsöffnung 713, den Lüftungskanal 716 und dessen Mündung 720 der Wanne 705 und anschließend durch den Lufteinlass 717 saugen und durch den Luftauslass 719 abgeben. Dies erreicht, dass ein gekoppelter Akkumulator mit Umgebungs-kühler Frischluft gekühlt werden kann.

Ein Wandung der Mündung 720 liegt flächig an ein Gehäuse 721 des Ladegeräts 701 um dessen Lufteinlass 717 herum an. Dies hat eine Dichtungswirkung, sodass verlässlich Umgebungsluft angesaugt werden kann. Im Übrigen wird auf die oben beschriebenen Ausführungsformen verwiesen.

Die Fig. 11 zeigt schließlich ein Ladesystem 800 einer achten Ausführungsform an. Das Ladesystem 800 hat ein Ladegerät und eine Abschirmung 802, die als Kisten-förmigen Einhausung 803 enthaltend einen Deckel 804 und eine Wanne 805 ausgeführt ist. In dem Deckel 804 ist ein Steuergerät (nicht gezeigt) und eine von dem Steuergerät gesteuerte Temperiereinheit (nicht gezeigt) untergebracht. Die Temperiereinheit beruht beispielsweise auf zumindest einem Peltier-Element, um ein Inneres der Einhausung 803 kühlen und/oder wärmen zu können, ohne eine nicht dicht schließbare Öffnung der Einhausung 803 vorzusehen. Das Steuergerät liest einen Ladestand des Ladegeräts aus und zeigt diesen an einer Anzeige 822 außen an, sodass man zum Überprüfen des Ladestands die Einhausung nicht öffnen muss. Außerdem hat das Ladesystem 800 ein Anschlusskabel 810 zum Anschluss an ein Stromnetz. Im Übrigen wird auf die oben beschriebenen Ausführungsformen verwiesen.

Obwohl die vorliegende Erfindung anhand von Ausführungsbeispielen beschrieben wurde, ist sie vielfältig modifizierbar.

### BEZUGSZEICHENLISTE

- 100: Ladesystem
- 101: Ladegerät
- 102: Abschirmung
- 103: Manschette
- 104: Ring
- 105: Schelle
- 106: untere Stirnseite
- 107: obere Stirnseite
- 108: Akkumulator
- 109: Schnittstelle
- 200: Ladesystem
- 201: Ladegerät
- 202: Abschirmung
- 203: Einhausung
- 204: Klappe
- 205: Gehäuseteil
- 208: Akkumulator
- 209: Schnittstelle
- 210: Netzkabel
- 211: Kabelabschnitt außerhalb der Einhausung
- 212: Kabelabschnitt innerhalb der Einhausung
- 213: Lüftungsöffnung
- 300: Ladesystem
- 301: Ladegerät
- 302: Abschirmung
- 303: Einhausung
- 304: Klappe
- 305: Gehäuseteil
- 400: Ladesystem
- 401: Ladegerät
- 402: Abschirmung
- 403: Einhausung
- 404: Klappe
- 405: Gehäuseteil
- 408: Akkumulator
- 409: Schnittstelle
- 500: Ladesystem
- 501: Ladegerät
- 502: Abschirmung
- 503: Einhausung
- 505: Wanne
- 513: Lüftungsöffnung
- 514: Aufnahme für Ladegerät
- 515: Seitenwand
- 516: Lüftungskanal
- 600: Ladesystem
- 601: Ladegerät
- 602: Abschirmung
- 603: Einhausung
- 605: Wanne
- 609: Schnittstelle
- 613: Lüftungsöffnung
- 616: Lüftungskanal
- 700: Ladesystem
- 701: Ladegerät
- 702: Abschirmung
- 703: Einhausung
- 705: Wanne
- 709: Schnittstelle
- 713: Lüftungsöffnung
- 715: Seitenwand
- 716: Lüftungsöffnung
- 717: Lufteinlass
- 718: Gebläseeinrichtung
- 719: Luftauslass
- 720: Mündung
- 721: Gehäuse
- 800: Ladesystem
- 802: Abschirmung
- 803: Einhausung
- 804: Deckel
- 805: Wanne
- 810: Anschlusskabel
- 822: Anzeige

## Patentansprüche

1. Ladesystem (100, 200, 300, 400, 500, 600, 700, 800) zum Laden zumindest eines Akkumulators (108, 208, 408) für eine mobile Werkzeugmaschine, insbesondere eine tragbare Werkzeugmaschine, enthaltend:
ein Ladegerät (101, 201, 301, 401, 501, 601, 701), das zumindest eine Schnittstelle (109, 209, 409, 609, 709) hat, die zum Koppeln eines Akkumulators (108, 208, 408) und zum elektrischen Laden eines daran gekoppelten Akkumulators (108, 208, 408) eingerichtet ist, und
eine zwischen zumindest zwei Lagen räumlich veränderbare Abschirmung (102, 202, 302, 402, 502, 602, 702, 802), wobei in einer Lage die Abschirmung (102, 202, 302, 402, 502, 602, 702, 802) die Schnittstelle (109, 209, 409, 609, 709) zum Koppeln eines Akkumulators (108, 208, 408) freigibt und in einer anderen Lage die Abschirmung (102, 202, 302, 402, 502, 602, 702, 802) dazu eingerichtet ist, die Schnittstelle (109, 209, 409, 609, 709) zumindest in einem gekoppelten Zustand, in welchem ein Akkumulator (108, 208, 408) mit der Schnittstelle (109, 209, 409, 609, 709) gekoppelt ist, allseitig gegen Spritzwasser abzuschirmen.

2. Ladesystem (100) nach Anspruch 1, welches als die Abschirmung (102) eine elastische Manschette (103) hat, welche zwischen dem Ladegerät (101) und einem an die Schnittstelle (109) gekoppelten Akkumulator (109) elastisch dichtend klemmbar ist.

3. Ladesystem (100) nach Anspruch 2, wobei die Schnittstelle (109) zumindest eine Lüftungsöffnung hat, die zum Belüften eines Innenvolumens eines mit einer korrespondierenden Lüftungsöffnung ausgestatteten Akkumulators (108) vorbereitet ist, und wobei die Manschette (103) auch diese Lüftungsöffnungen umschließt.

4. Ladesystem (200, 300, 400, 500, 600, 700, 800) nach einem der Ansprüche 1 bis 3, welches als die Abschirmung (202, 302, 402, 502, 602, 702, 802) eine Einhausung (203, 303, 403, 503, 603, 703, 803) hat, wobei die Einhausung (203, 303, 403, 503, 603, 703, 803) eine Klappe (204, 304, 404, 804) hat, wobei die Einhausung (203, 303, 403, 503, 603, 703, 803) dazu eingerichtet ist, bei geschlossener Klappe (204, 304, 404, 804) die Schnittstelle (209, 409, 609, 709) samt eines an die Schnittstelle (209, 409, 609, 709) gekoppelten Akkumulators (208, 408) zumindest spritzwasserdicht zu umschließen, und wobei die Klappe (204, 304, 404, 804) zum Koppeln eines Akkumulators (208, 408) an die Schnittstelle (209, 409, 609, 709) öffenbar ist.

5. Ladesystem (200, 400, 500, 600, 700, 800) nach Anspruch 4, wobei das Ladegerät (201, 401, 501, 601, 701) ohne die Einhausung (203, 403, 503, 603, 703, 803) zum Laden eines daran gekoppelten Akkumulators (208, 408) betreibbar ist.

6. Ladesystem (400) nach Anspruch 4 oder 5, wobei die Einhausung (403) an das Ladegerät (401) angebracht oder anbringbar ist, und zwar vorzugsweise werkzeuglos.

7. Ladesystem (200, 300, 500, 600, 700, 800) nach einem der Ansprüche 4 oder 5, wobei die Einhausung (203, 303, 503, 603, 703, 803) das Ladegerät (201, 301, 501, 601, 701) umgibt, und
a) die Einhausung (203, 303, 503, 603, 703, 803) eine spritzwassergeschützte Kabeldurchführung für ein Stromkabel (210, 810) des Ladegeräts hat, oder
b) das Ladegerät (201, 301, 501, 601, 701) ein Steckerprofil zum Verbinden eines Stromkabels (210, 810), die Einhausung (203, 303, 503, 603, 703, 803) außen ein zu dem Ladegerät (201, 301, 501, 601, 701) gleiches Steckerprofil und damit elektrisch verbunden innen ein zu dem Ladegerät (201, 301, 501, 601, 701) komplementäres Steckerprofil hat.

8. Ladesystem (200, 300, 400, 500, 600, 700, 800) nach einem der Ansprüche 4 bis 7, wobei die Klappe (204, 304, 404, 804) abschließbar ist.

9. Ladesystem (200, 300, 400, 500, 600, 700, 800) nach einem der Ansprüche 4 bis 8, wobei die Einhausung (203, 303, 403, 503, 603, 703, 803) einen Wärmeübertrager zum Wärmeenergieübertragen zwischen einer Luft innerhalb der Einhausung (203, 303, 403, 503, 603, 703, 803) und einer Luft außerhalb der Einhausung (203, 303, 403, 503, 603, 703, 803) hat.

10. Ladesystem (200, 500, 600, 700) nach einem der Ansprüche 4 bis 9, wobei die Einhausung (203, 503, 603, 703) zumindest eine spritzwassergeschützte Lüftungsöffnung (213, 513, 613, 713) hat, wobei vorzugsweise ein Lüftungskanal (516, 616, 716) in einer Betriebslage von der Lüftungsöffnung (513, 613, 713) aufwärts verläuft.

11. Ladesystem (700) nach Anspruch 10, wobei zumindest zwei Lüftungsöffnungen (713) in der Einhausung (703) vorgesehen sind, und wobei zumindest eine der Lüftungsöffnungen (713) mit einer Gebläseeinrichtung (718) in Reihe geschaltet ist.

12. Ladesystem (700) nach Anspruch 11, wobei die Gebläseeinrichtung (718) eingerichtet ist, um mit einem Lüftungskanal eines Akkumulators in Reihe geschaltet zu sein, falls der Akkumulator an die Schnittstelle (709) gekoppelt ist.

13. Ladesystem (700) nach einem der vorigen Ansprüche, wobei das Ladegerät (701) die bzw. eine Gebläseeinrichtung (718) enthält, und wobei die Schnittstelle (709) zumindest eine mit dieser Gebläseeinrichtung (718) in Reihe geschaltete Lüftungsöffnung (719) hat, die zum Belüften eines Innenvolumens eines mit einer korrespondierenden Lüftungsöffnung ausgestatteten Akkumulators vorbereitet ist.

14. Ladesystem nach einem der vorigen Ansprüche, enthaltend ein Kopplungsmittel zum elektrischen Koppeln eines weiteren Ladesystems.

15. Ladesystem (800) nach einem der vorigen Ansprüche, enthaltend ein Steuergerät, das auf zumindest eine der folgenden Arten eingerichtet ist:
zum Ausgeben eines Indikators für einen Ladestand eines zum Laden mit dem Ladegerät gekoppelten Akkumulators und/oder eines Indikators für eine Stromaufnahme des Ladesystems an einem Ausgabemittel (822), wobei das Ausgabemittel vorzugsweise an dem Steuergerät, an einer Außenfläche der Einhausung (803) und/oder an einem mittels einer Kommunikationseinrichtung verbundenen oder verbindbaren Endgerät vorhanden ist, und/oder wobei das Ausgeben ein Lichtsignal, ein Geräuschsignal und/oder ein haptisches Signal ist,
zum Steuern eines Ladens eines mit dem Ladegerät gekoppelten Akkumulators, vorzugsweise in Abhängigkeit einer Außentemperatur, einer Innentemperatur der Einhausung und/oder einer Temperatur dieses Akkumulators,
zum Steuern einer Reihenfolge eines Ladens mehrerer mit dem Ladegerät und/oder einem der Ladegeräte und/oder einem Ladegerät eines elektrisch gekoppelten weiteren Ladesystems in Abhängigkeit einer Außentemperatur, einer Innentemperatur der Einhausung oder Innentemperaturen der Einhausungen, Temperaturen der Akkumulatoren, einer zur Verfügung stehenden Menge elektrischer Energie oder in elektrische Energie wandelbarer Energie, und/oder
zum Überwachen einer Innentemperatur der Einhausung und/oder einer Innentemperatur einer Einhausung eines elektrisch gekoppelten weiteren Ladesystems und/oder einer Temperatur eines bzw. jedes mit dem bzw. jedem Ladegerät gekoppelten Akkumulators und zum Ausgeben eines Warnsignals in Abhängigkeit eines Vergleichs der jeweiligen überwachten Temperatur oder Temperaturen und/oder dessen Verlaufs oder deren Verläufe mit einem jeweils zum Verhindern eines Überschreitens einer Ladehöchsttemperaturn und/oder einer Lagerhöchsttemperatur bemessenen Schwellwert.
